Europäisches Patentamt

European Patent Office

Office européen des brevets

(11) Veröffentlichungsnummer: **0 396 161**

**A1**

## (12) EUROPÄISCHE PATENTANMELDUNG

(21) Anmeldenummer: **90200466.2**

(22) Anmeldetag: **19.12.89**

(51) Int. Cl.5: **F16F 1/38, B61F 5/00**

(30) Priorität: **23.12.88 DE 3843447**
**19.07.89 DE 3923888**

(43) Veröffentlichungstag der Anmeldung:
**07.11.90 Patentblatt 90/45**

(84) Benannte Vertragsstaaten:
**GR**

(71) Anmelder: **PETER-BTR Gummiwerke**
**Aktiengesellschaft**
**Geleitstrasse 11b Postfach 80 11 60-80**
**D-6450 Hanau 8(DE)**

(72) Erfinder: **Ortwein, Hermann**
**Niehler Kirchweg 155**
**5000 Koeln 60(DE)**
Erfinder: **Der weitere Erfinder hat auf seine**
**Nennung verzichtet**

(74) Vertreter: **Happe, Otto, Dipl.-Ing.**
**Isselburger Strasse 12**
**D-5000 Köln 60(DE)**

(54) **Rollfeder für Fahrzeuge.**

(57) Eine Rollfeder für Fahrzeuge, insbesondere Schienenfahrzeuge, besteht aus einem Federgehäuse (1) vorgegebener Innenkontur und einem in dieses eingreifenden Federdorn (2) vorgegebener Außenkontur, die sich über einen in dem Zwischenraum zwischen Federgehäuse (1) und Federdorn (2) angeordneten Gummiring (3) bei Einwirkung einer vertikalen und/oder axialen und/oder lateralen Kraft unter Einfederung im Bereich eines vertikalen und/oder axialen und/oder lateralen Federweges aufeinander abstützen. Hierbei ist der Gummiring (3) unter Vorspannung zwischen einem äußeren Ring (4) und einem inneren Ring (5) angeordnet ist, so daß diese Teile ein Federelement bilden. Der Außendurchmesser des äußeren Ringes (4) und der Innendurchmesser des inneren Ringes (5) sind so bemessen, daß das Federelement mit einer Spiel, Übergangs- oder Preßpassung zwischen Federgehäuse (1) und Federdorn (2) eingefügt ist.

Fig. 1

## Rollfeder für Fahrzeuge

Die Erfindung betrifft eine Rollfeder für Fahrzeuge, insbesondere Schienenfahrzeuge, bestehend aus einem Federgehäuse vorgegebener Innenkontur und einem in dieses eingreifenden Federdorn vorgegebener Außenkontur, die sich über einen in den Zwischenraum zwischen Federgehäuse und Federdorn angeordneten Gummiring bei Einwirkung einer vertikalen und/oder axialen und/oder lateralen Kraft, unter Einfederung im Bereich eines vertikalen und/oder axialen und/oder lateralen Federweges aufeinander abstützen.

Derartige Rollfedern eignen sich insbesondere als Achsfedern (sogenannte Primärfedern) und Wiegefedern (sogenannte Sekundärfedern) zur Bildung der Verbindung zwischen Oberkasten und Drehgestell eines Fahrzeugs, da sie weitgehend wartungsfrei, schalldämmend und von großer Dauerfestigkeit sind. Sie gewährleisten ferner eine leichte Montage und gute Zugänglichkeit und eignen sich insbesondere für Schienenfahrzeuge ohne Lastwechsel (wie Lokomotiven) oder mit Lastwechsel (wie Personen-und Güterwagen). Die den Gummifedern zuzurechnenden Rollfedern übertreffen andere Federarten, wie Stahlfedern und Luftfedern in ihrer Wartungsfreiheit; sie verhindern sofortige Betriebsunfähigkeit und haben gute Notlaufeigenschaften. Durch die Kontur der Abrollflächen zwischen Federgehäuse und Federdorn und deren Stellung zueinander sowie der Härte des Gummirings können unterschiedliche Kennlinien eingestellt werden, so daß bei gleichbleibenden Abmessungen der Rollfeder unterschiedlichen Belastungen entsprochen werden kann. Nachteilig ist jedoch, daß der Zusammenbau der Rollfeder verhältnismäßig schwierig ist und es dabei leicht zu Beschädigungen des Gummirings kommen kann. Es werden daher besondere Einrichtungen benötigt, die es notwendig machen, den Zusammenbau und das Zerlegen der Rollfeder in der Werkstatt durchzuführen.

Der Erfindung liegt die Aufgabe zugrunde, die Rollfeder der eingangs genannten Art zu verbessern und so auszubilden, daß sie ohne besondere Hilfsmittel leicht zusammengebaut und erforderlichenfalls auch wieder zerlegt werden kann, ohne den Gummiring einer Belastung auszusetzen.

Die gestellte Aufgabe wird im wesentlichen dadurch gelöst, daß der Gummiring unter Vorspannung zwischen einem äußeren Ring und einem inneren Ring angeordnet ist, so daß diese Teile ein Federelement bilden, und daß der Außendurchmesser des äußeren Ringes und der Innendurchmesser des inneren Ringes so bemessen sind, daß das Federelement mit einer Spiel-, Übergangs- oder Preßpassung zwischen Federgehäuse und Federdorn eingefügt ist.

Bei der erfindungsgemäßen Rollfeder muß der Gummiring nicht mehr unter starker Dehnung und Stauchung zwischen Federgehäuse und Federdorn eingerollt werden; er ist lediglich zwischen dem Federgehäuse und dem Federdorn eingepreßt.

Für den Zusammenbau und das etwaige Zerlegen der erfindungsgemäßen Rollfeder sind lediglich solche Hilfsmittel erforderlich, die auch für den Ein- und Ausbau der gesamtem Rollfeder benötigt werden.

In Ausgestaltung der Erfindung ist der äußere Ring und/oder der innere Ring durch Ringsegmente gebildet, die über Dehnungsbereiche bzw. Reduktionsbereiche miteinander in Verbindung stehen und die an den Innenumfang und/oder an den Außenumfang des Gummirings anvulkanisiert sind.

Bei der so ausgebildeten Rollfeder werden zur Vorspannung des Gummirings die inneren Segmente geöffnet bzw. auf einen größeren Innenumfang gebracht, während die äußeren Ringsegmente durch Vorspannung auf einen geringeren Außenumfang gebracht werden.

Es ist von besonderem Vorteil, wenn die Ringe und/oder die Ringsegmente winkelsymmetrisch - bezogen auf die Mittelachse des Gummirings - angeordnet sind, so daß ein gleichmäßiges Öffnen der inneren Ringsegmente und/oder ein gleichmäßiges Schließen der äußeren Ringsegmente, gegebenenfalls bis auf deren Anschlag, erfolgt. Hierdurch wird eine gleichmäßige Beanspruchung des Gummirings im Betrieb der Rollfeder gewährleistet.

In weiterer Ausgestaltung der Erfindung sind am Innenumfang und am Außenumfang des Gummirings je vier Ringsegmente vorgesehen. Die Ringsegmente nehmen dabei etwa ein Viertel des jeweiligen Innen- bzw. Außenumfangs ein.

Zweckmäßigerweise grenzen die Ringsegmente des inneren Ringes im nicht vorgespannten Zustand des Gummirings in Trennfugen aneinander.

Nach einem weiteren Merkmal der Erfindung sind die Ringsegmente des äußeren Ringes im nicht vorgespannten Zustand des Gummirings durch je einen Spalt bzw. einen Reduktionsbereich getrennt. Beim Einsetzen des Gummirings in die Rollfeder können dann die Ringsegmente bei Reduzierung des Außenumfangs des Gummirings unter Verringerung der Spaltbreite bzw. der Reduktions bereichsbreite bis auf Anschlag aneinander gebracht werden.

Bei den üblichen Abmessungen des Gummirings beträgt die Breite jedes Spaltes bzw. jedes Reduktionsbereichs mindestens 5 % des Durchmessers des Gummirings.

Bei einer vorteilhaften Ausgestaltung der Erfindung sind die Ringsegmente über Stege mit dem Innenumfang bzw. dem Außenumfang des Gummirings verbunden, deren einander zugewandte Randflächen konkav gekrümmt sind. Hierdurch bleibt, solange bis die Ringsegmente auf Anschlag liegen, gummiseitig immer noch eine Aussparung frei, die sich erst schließt, wenn die Ringsegmente sich gegeneinander abstützen, also berühren.

Um die Beanspruchung des Gummirings so gering wie möglich zu halten, sieht eine weitere Ausgestaltung der Erfindung vor, daß die Breite jedes Steges etwa der Breite der neutralen Zone entspricht.

Der Gummiring weist vorzugsweise einen im wesentlichen kreisrunden Querschnitt auf. Es ist jedoch zweckmäßig, daß der Gummiring an seinem Innenumfang und an seinem Außenumfang ebene Ringflächen für die Aufnahme der Ringsegmente aufweist.

Da die Ringsegmente im wesentlichen als Montagehilfe dienen, liegt die Verbindungsfläche zwischen dem Gummiring und den Ringsegmenten vorzugsweise in der neutralen Zone des Gummirings, so daß die Verbindungsstelle nicht beansprucht wird.

Die Montage des Gummirings kann dadurch noch weiter verbessert werden, daß der äußere Ring und der innere Ring bzw. die Ringsegmente konisch ausgebildet sind und konzentrisch um die Mittelachse des Gummirings verlaufen.

Bei der erfindungsgemäßen Rollfeder ist es auch möglich, den Gummiring in Draufsicht unrund, insbesondere oval auszubilden, so daß hinsichtlich der radialen Beanspruchung des Gummirings für verschiedene Achsen unterschiedliche Steifigkeiten vorliegen.

Die Ringe bzw. die Ringsegmente bestehen vorzugsweise aus Metall; sie können aber auch aus starrem Kunststoff bestehen.

Um die Montage noch weiter zu erleichtern, kann ferner vorgesehen sein, daß die Außenflächen des äußeren Rings und des inneren Rings bzw. der Ringsegmente mit einer Kunststoffschicht mit geringem Reibungskoeffizienten versehen sind.

In Weiterbildung der Erfindung besteht der Gummiring aus mehreren konzentrisch in einer Ebene liegenden, ringförmigen Teilabschnitten, zwischen denen jeweils ein vorzugsweise geteilter Ring aus Ringsegmenten anvulkanisiert ist.

Der Zusammenbau und das Zerlegen der erfindungsgemäßen Rollfeder werden noch dadurch erleichtert, daß der äußere Ring und/oder der innere Ring bzw. die Ringsegmente mit einer dem Federgehäuse bzw. dem Federdorn zugewandten Anschrägung versehen ist.

Weitere vorteilhafte Ausgestaltungen der Erfindung sind in den Unteransprüchen 18 bis 25 beschrieben.

Die Erfindung ist anhand der Zeichnung, in der mehrere Ausführungsbeispiele dargestellt sind, näher erläutert, wobei auch weitere Merkmale, Vorteile und Anwendungsmöglichkeiten der Erfindung genannt werden, die für sich allein oder in beliebiger sinnvoller Kombination den Gegenstand der Erfindung bilden, auch unabhängig von ihrer Zusammenfassung oder Rückbeziehung. Es zeigen:

Fig. 1 eine Rollfeder, die vorwiegend für die Aufnahme radialer Kräfte bestimmt ist, im Längsschnitt;

Fig. 2 ein aus einem Gummiring sowie einem inneren und einem äußeren Ring bestehendes Federelement, im Längsschnitt;

Fig. 3 eine Rollfeder, die für die Aufnahme radialer und axialer Kräfte bestimmt ist, im Längsschnitt;

Fig. 4 die Rollfeder gemäß Fig. 3, in Richtung der Pfeile x und y gesehen;

Fig. 5 eine Rollfeder für die Aufnahme sehr hoher axialer Kräfte, im Längsschnitt;

Fig. 6 eine Rollfeder, die als Zug- und Stoßvorrichtung Verwendung finden kann, im Längsschnitt;

Fig. 7 eine andere, als Zug- und Stoßvorrichtung zu verwendende Rollfeder, ebenfalls im Längsschnitt;

Fig. 8 ein aus einem Gummiring mit daran anvulkanisierten Ringsegmenten bestehendes Federelement für eine die Erfindung verwirklichende Rollfeder, in Draufsicht;

Fig. 9 das Federelement gemäß Fig. 8 in einem vertikalen Schnitt nach der Linie A-A in Fig. 8;

Fig. 10 ein anderes Federelement mit daran anvulkanisierten Ringsegmenten in einem vertikalen Schnitt entsprechend Fig. 9;

Fig. 11 ein Federelement mit im wesentlichen ovaler Gestalt für eine erfindungsgemäße Rollfeder, in Draufsicht;

Fig. 12 drei konzentrisch zueinander angeordnete Federelemente in einem vertikalen Schnitt.

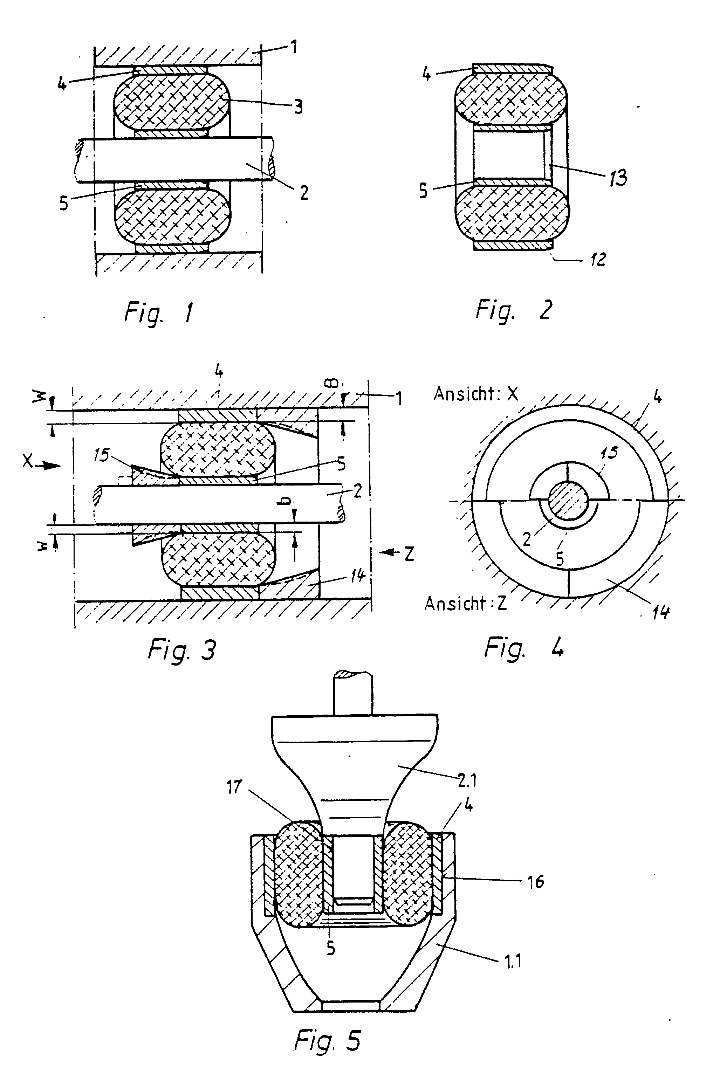

Die in Fig. 1 dargestellte Rollfeder besteht aus einem als Hohlzylinder ausgebildeten Federgehäuse 1, einem als Welle - gegebenenfalls auch als Hohlwelle - ausgebildeten Federdorn 2 und einem Gummiring 3, wobei der Gummiring 3 unter Vorspannung zwischen einem äußeren Ring 4 und einem inneren Ring 5 angeordnet ist. Die Ringe 4 und 5 können aus Metall oder aus Kunststoff bestehen. Der Ring 4 ist - wie aus Fig. 2 zu ersehen ist -mit einer dem Federgehäuse 1 zugewandten Anschrägung 12 und der Ring 5 mit einer dem Federdorn 2 zugewandten Anschrägung 13 versehen.

Bei der in den Fig. 3 und 4 dargestellten Rollfeder ist in den das Federgehäuse 1 bildenden Hohlzylinder eine Hülse 14 mit etwa trapezförmigem Querschnitt eingeschoben. Die dem Federdorn 2 zugewandte Seite des Trapezes kann auch - wie mit gestrichelten Linien angedeutet - konkav verlaufen. Die Breite B der kleinsten Seite des Trapezes entspricht der Wandstärke W des äußeren Ringes 4; diese kleinste Seite des Trapezes liegt an der Stirnfläche des äußeren Ringes 4 an. Eine weitere Hülse 15 ist auf die den Federdorn 2 bildende Welle aufgeschoben. Diese Hülse 15 besitzt ebenfalls einen etwa trapezförmigen Querschnitt, wobei hierbei die dem Federgehäuse 1 zugewandte Seite des Trapezes - wie mit gestrichelten Linien angedeutet - konkav verlaufen kann. Bei der Hülse 15 entspricht die Breite b der kleinsten Seite des trapezförmigen Querschnitts der Wandstärke w des inneren Ringes 5.

Wie aus Fig. 4 zu ersehen ist, können die Hülse 14 und die Hülse 15 in axialer Richtung geteilt ausgebildet sein, wobei die Hülse 14 aus zwei oder mehr Einzelteilen bestehen kann. Die Einzelteile der Hülsen 14 und 15 sind durch Normteile, wie Schrauben, Scheiben, Splinte, Stifte o. dgl. zusammengehalten und in ihrer Lage arretiert.

Fig. 5 zeigt eine Rollfeder, in deren glockenförmigem Federgehäuse 1.1 und in deren kegelförmigem Federdorn 2.1 Ausnehmungen 16 und 17 für die Ringe 4 und 5 vorgesehen sind.

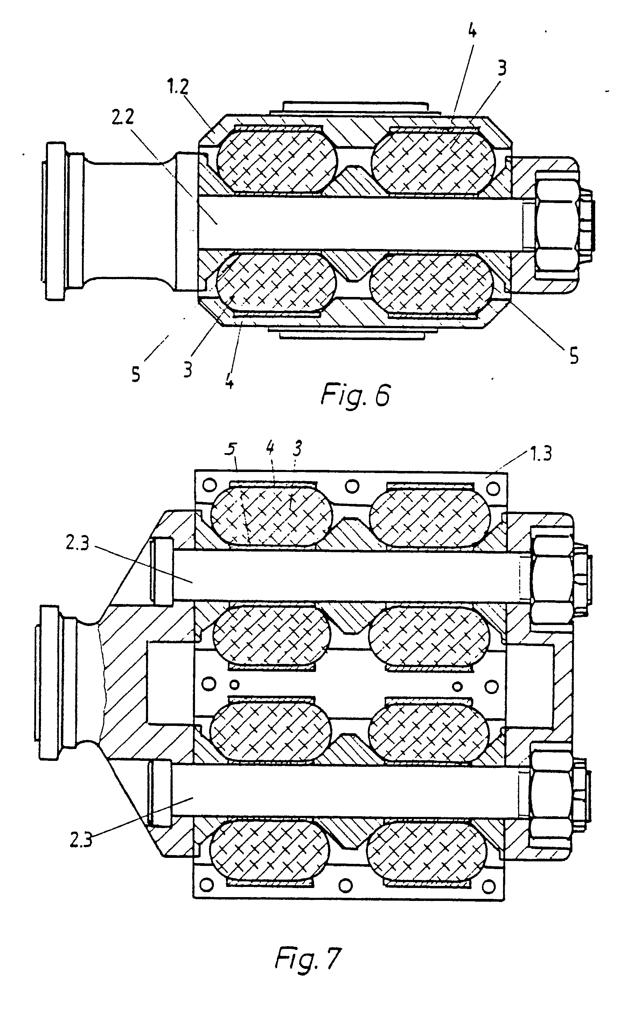

Bei dem Ausführungsbeispiel gemäß Fig. 6 sind zwei aus jeweils einem Gummiring 3 und Ringen 4 und 5 bestehende Federelemente koaxial hintereinander innerhalb eines gemeinsamen Federgehäuses 1.2 und auf einem gemeinsamen Federdorn 2.2 angeordnet, während bei dem Ausführungsbeispiel gemäß Fig. 7 zwei aus jeweils einem Gummiring 3 und Ringen 4 und 5 bestehende Federelemente nebeneinander angeordnet sind. Bei diesem Ausführungsbeispiel haben die Federelemente zwar ein gemeinsames Federgehäuse 1.3, aber gesonderte den Federdorn 2.3 bildende Wellen.

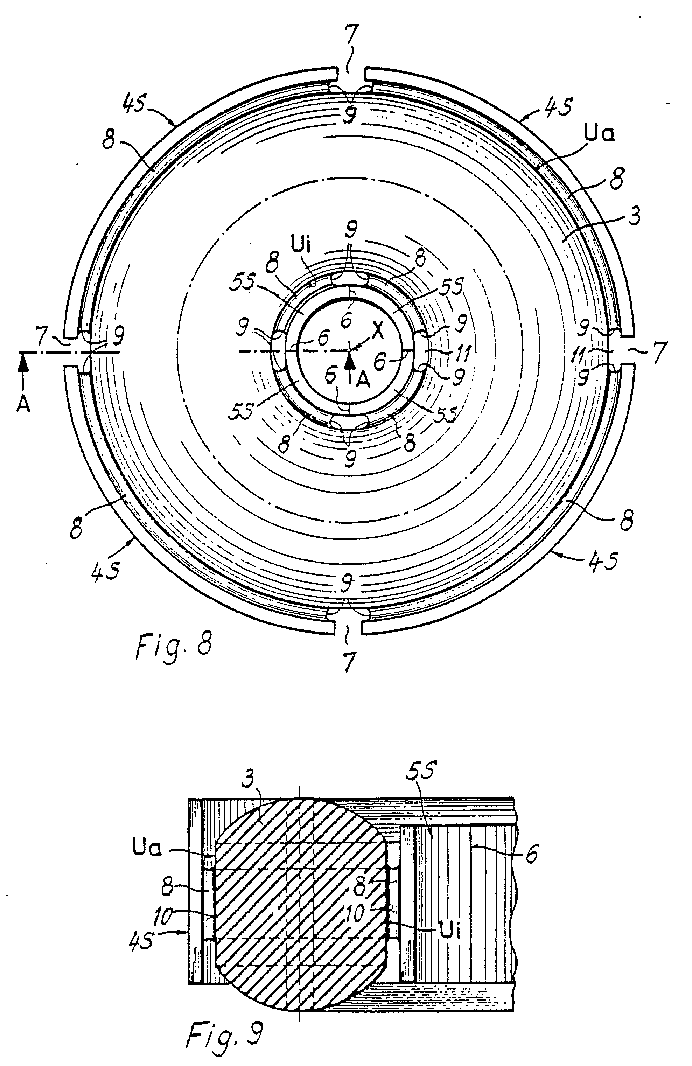

Bei der in den Fig. 8 und 9 dargestellten Ausführungsform eines Federelements für eine erfindungsgemäße Rollfeder sind auf den Innenumfang Ui und auf den Außenumfang Ua des Gummirings 3 je vier kreiszylindrische Ringsegmente 4S, 5S aufvulkanisiert. Dargestellt ist der Gummiring 3 in seiner Form vor dem Einsetzen in die Rollfeder. Dabei grenzen die inneren Ringsegmente 5S mit ihren einander zugekehrten Randflächen in einer Trennfuge 6 unmittelbar aneinander, während die einander zugekehrten Randflächen der äußeren Ringsegmente 4S unter Bildung eines Spaltes 7 von einigen Millimetern im Abstand voneinander liegen. Dies ermöglicht beim Einsetzen des Gummirings 3 in die Rollfeder eine Dehnung des inneren Umfangsbereichs des Gummirings 3, so daß die inneren Ringsegmente 5S auf Abstand zueinander gelangen, während die äußeren Ringsegmente 4S durch Reduzierung des äußeren Umfangsbereichs des Gummirings 3 bis auf Anschlag ihrer aneinander zugewandten Randflächen gebracht werden können. Umfangsreduzierung bzw. Umfangserweiterung sollten zwischen fünf und fünfundzwanzig Prozent des Ringdurchmessers liegen. Ersichtlich können die inneren Ringsegmente 5S unter Bildung eines geschlossenen Ringes anstelle der Trennfuge 6 auch über Dehnungsbereiche verbunden sein und gleichermaßen die äußeren Ringsegmente 4S anstelle der Spalten 7 über flexible Reduktionsbereiche, so daß die gewünschte Dehnung des Innenumfangs und die gewünschte Reduzierung des Außenumfangs des Gummirings 3 beim Einsetzen des Gummirings 3 in die Rollfeder erzielt werden kann.

Bei dem Ausführungsbeispiel gemäß Fig. 8 und 9 sind sowohl die äußeren Ringsegmente 4S als auch die inneren Ringsegmente 5S winkelsymmetrisch zur Achse x des Gummirings 3 auf den Innenumfang Ui bzw. den Außenumfang Ua des Gummirings 3 aufvulkanisiert, um ein symmetrisches Dehnungs- und Kompressionsverhalten zu erzielen. Dabei sind die Ringsegmente 4S, 5S jeweils über Stege 8 mit dem Innenumfang Ui bzw. dem Außenumfang Ua des Gummirings 3 verbunden. Die Stege 8 sind an ihren einander zugewandten Enden mit konkav gekrümmten Randflächen 9 versehen, so daß auch in der jeweils geschlossenen Lage der Ringsegmente 4S, 5S, wie in Fig. 8 bei den inneren Ringsegmenten 5S ersichtlich, jeweils eine Aussparung 11 verbleibt. Wie aus der Fig. 9 ersichtlich, sind der Innenumfang Ui und der Außenumfang Ua im Schnitt mit ebenen Ringflächen 10 ausgebildet, auf die die Ringsegmente 4S, 5S aber die Stege aufvulkanisiert sind. Auch die jeweils vom Gummiring 3 abgewandten Oberflächen der Ringsegmente 4S, 5S sind im Schnitt eben gestaltet, so daß die Ringsegmente 4S, 5S über ihre Höhe im wesentlichen eine gleichmäßige Wandstärke haben. Wie aus der Fig. 9 zu ersehen, können dabei die inneren Ringsegmente 5S eine etwas geringere Höhe als die äußeren Ring segmente 4S haben; am (in der Fig. 9) unteren Rand können sie jedoch auf einer Höhe liegen. Während der Gummiring 3 auf der oberen Seite mit dem oberen Rand der Ringsegmente 4S fluchtet, kann der Gummiring 3 auf der unteren Seite über die unteren Ränder der inneren Ringsegmente 5S und der äußeren Ringsegmente 4S hinausragen.

Die Verbindungsflächen zwischen dem Gummiring 3 und den Ringsegmenten 4S, 5S befinden sich vorzugsweise in der neutralen Zone des Gummirings 3. Die Ringsegmente 4S, 5S bestehen zweckmäßigerweise aus Metall; sie können aber auch aus starrem Kunststoff bestehen.

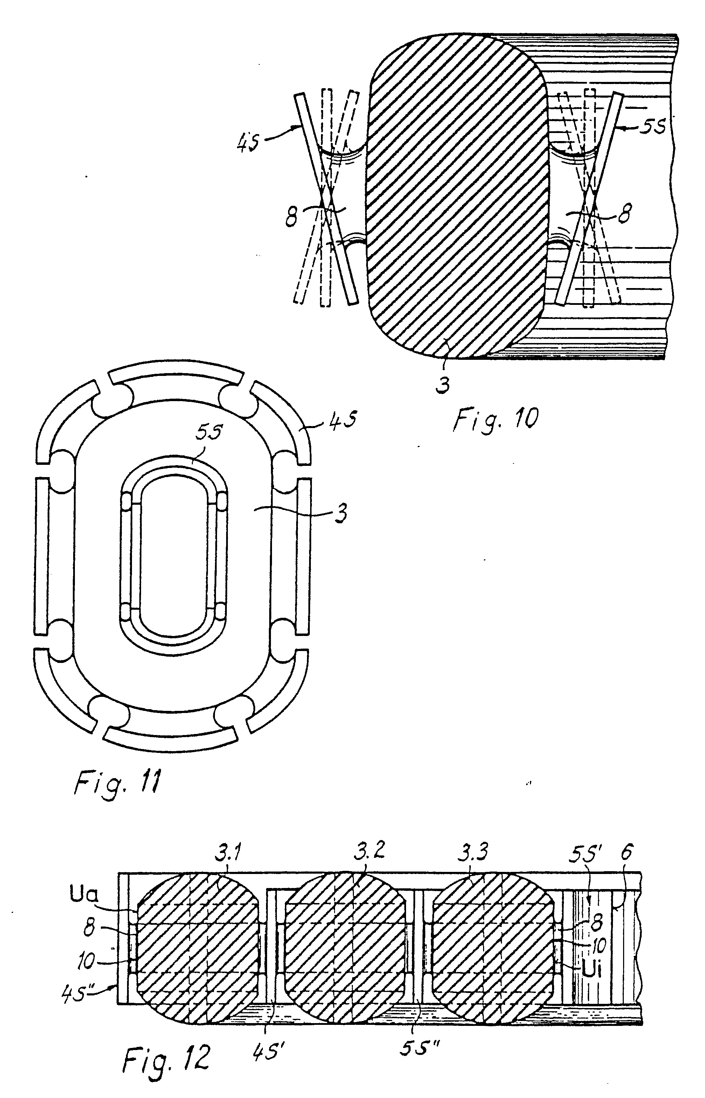

In Fig. 10 ist angedeutet, daß die Ringsegmente 4S, 5S durchaus nicht parallel zur Mittelachse X des Gummirings 3 angeordnet sein müssen, sondern bei unterschiedlicher Schrägstellung, je nach gewünschter Kennlinie, sogar weitere Vorteile erzielt werden können.

Fig. 11 veranschaulicht einen dem in Fig. 8 dargestellten Federelememt ähnliches Federelement, das jedoch in der Draufsicht oval ausgestaltet ist, so daß es bei Radialbeanspruchung in unterschiedlichen Achsen unterschiedliche Steifigkeiten hat. Sie inneren Ringsegmente und die äußeren Ringsegmente 4S sind dabei an die ovale Kontur angepaßt.

Fig. 12 zeigt ein Federelement in einer dreiteiligen Ausführungsform, das im Prinzip aus drei Gummiringen 3.1, 3.2, 3.3 mit unterschiedlich großem Durchmesser besteht, die konzentrisch ineinanderliegen und zwischen denen jeweils ein aus Ringsegmenten $4S'$, $4S''$, $5S'$, $5S''$ gebildeter Ring einvulkanisiert ist. Zwischen jedem Gummiring 3.1, 3.2, 3.3 und jedem Ringsegment $4S'$, $4S''$, $5S'$, $5S''$ befindet sich ein Steg 8. Die Ringsegmente $4S'$, $4S''$, $5S'$, $5S''$ sind analog zu der Ausführungsform nach Fig. 9 ausgebildet. Bei dieser Variante wird die Horizontalkraft vergrößert bzw. die horizontale Einfederung sowohl lateral als auch axial erhöht, während gleichzeitig bei vertikaler Einfederung gleiche Federwege wie bei den zuvor geschilderten Ausführungsformen vorliegen.

**Ansprüche**

1. Rollfeder für Fahrzeuge, insbesondere Schienenfahrzeuge, bestehend aus einem Federgehäuse (1) vorgegebener Innenkontur und einem in dieses eingreifenden Federdorn (2) vorgegebener Außenkontur, die sich über einen in dem Zwischenraum zwischen Federgehäuse (1) und Federdorn (2) angeordneten Gummiring (3) bei Einwirkung einer vertikalen und/oder axialen und/oder lateralen Kraft unter Einfederung im Bereich eines vertikalen und/oder axialen und/oder lateralen Federweges aufeinander abstützen, dadurch gekennzeichnet, daß der Gummiring (3) unter Vorspannung zwischen einem äußeren Ring (4) und einem inneren Ring (5) angeordnet ist, so daß diese Teile ein Federelement bilden, und daß der Außendurchmesser des äußeren Ringes (4) und der Innendurchmesser des inneren Ringes (5) so bemessen sind, daß das Federelement mit einer Spiel-, Übergangsoder Preßpassung zwischen Federgehäuse (1) und Federdorn (2) eingefügt ist.

2. Rollfeder nach Anspruch 1, dadurch gekennzeichnet, daß der äußere Ring (4) und/oder der innere Ring (5) durch Ringsegmente (4S, 5S) gebildet ist, die über Dehnungsbereiche bzw. Reduktionsbereiche miteinander in Verbindung stehen und die an den Innenumfang (Ui) und/oder an den Außenumfang (Ua) des Gummirings (3) anvulkanisiert sind.

3. Rollfeder nach Anspruch 1 oder 2, dadurch gekennzeichnet, daß die Ringe (4, 5) und/oder die Ringsegmente (4S, 5S) winkelsymmetrisch - bezogen auf die Mittelachse (X) des Gummirings (3) - angeordnet sind.

4. Rollfeder nach Anspruch 2 oder 3, dadurch gekennzeichnet, daß am Innenumfang (Ui) und am Außenumfang (Ua) des Gummirings (3) je vier Ringsegmente (4S, 5S) vorgesehen sind.

5. Rollfeder nach Anspruch 2, 3 oder 4, dadurch gekennzeichnet, daß die Ringsegmente (5S) des inneren Ringes (5) im nicht vorgespannten Zustand des Gummirings (3) in Trennfugen (6) aneinandergrenzen.

6. Rollfeder nach einem der Ansprüche 2 bis 5, dadurch gekennzeichnet, daß die Ringsegmente (4S) des äußeren Ringes (4) im nicht vorgespannten Zustand des Gummiring (3) durch je einen Spalt (7) bzw. einen Reduktionsbereich getrennt sind.

7. Rollfeder nach Anspruch 6, dadurch gekennzeichnet, daß die Breite jedes Spaltes (7) bzw. jedes Reduktionsbereichs mindestens 5 des Durchmessers des Gummirings (3) beträgt.

8. Rollfeder nach einem der Ansprüche 2 bis 7, dadurch gekennzeichnet, daß die Ringsegmente (4S, 5S) über Stege (8) mit dem Innenumfang (Ui) bzw. dem Außenumfang (Ua) des Gummirings (3) verbunden sind, deren einander zugewandten Randflächen (9) konkav gekrümmt sind.

9. Rollfeder nach Anspruch 8, dadurch gekennzeichnet, daß die Breite jedes Steges (8) etwa der Breite der neutralen Zone entspricht.

10. Rollfeder nach einem der Ansprüche 1 bis 9. dadurch gekennzeichnet, daß der Gummiring (3) einen im wesentlichen kreisförmigen Querschnitt aufweist.

11. Rollfeder nach einem der Ansprüche 2 bis 10, dadurch gekennzeichnet, daß der Gummiring (3) an seinem Innenumfang (Ui) und an seinem Außenumfang (Ua) ebene Ringflächen (10) für die Aufnahme der Ringsegmente (4S, 5S) aufweist.

12. Rollfeder nach einem der Ansprüche 2 bis 11, dadurch gekennzeichnet, daß die Verbindungsfläche .zwischen dem Gummiring (3) und den Ringsegmenten (4S, 5S) in der neutralen Zone des Gummirings (3) liegen.

13. Rollfeder nach einem der Ansprüche 1 bis 12, dadurch gekennzeichnet, daß der äußere Ring (4) und der innere Ring (5) bzw. die Ringsegmente (4S, 5S) konisch ausgebildet sind und konzentrisch um die Mittelachse (X) des Gummirings (3) verlaufen.

14. Rollfeder nach einem der Ansprüche 1 bis 12, dadurch gekennzeichnet, daß der Gummiring (3) in Draufsicht unrund, insbesondere oval ist.

15. Rollfeder nach einem der Ansprüche 1 bis 14, dadurch gekennzeichnet, daß die Außenflächen des äußeren Rings (4) und des inneren Rings (5) bzw. der Ringsegmente (4S, 5S) mit einer Kunststoffschicht mit geringem Reibungskoeffizienten versehen sind.

16. Rollfeder nach einem der Ansprüche 1 bis 15, dadurch gekennzeichnet, daß der Gummiring (3) aus mehreren konzentrisch in einer Ebene liegenden, ringförmigen Teilabschnitten besteht, zwischen denen jeweils ein vorzugsweise geteilter Ring aus Ringsegmenten anvulkanisiert ist.

17. Rollfeder nach einem der Ansprüche 1 bis 16, dadurch gekennzeichnet, daß der äußere Ring (4) und/oder der innere Ring (5) bzw. die Ringsegmente (4S, 5S) mit einer dem Federgehäuse (1) bzw. dem Federdorn (2) zugewandten Anschrägung (11, 12) versehen sind.

18. Rollfeder nach einem der Ansprüche 1 bis 17, dadurch gekennzeichnet, daß das Federgehäuse (1) als Hohlzylinder und der Federdorn (2) als Welle ausgebildet ist.

19. Rollfeder nach Anspruch 18, dadurch gekennzeichnet, daß in den das Federgehäuse (1) bildenden Kohlzylinder mindestens eine Hülse (13) mit etwa trapezförmigem Querschnitt - die dem Federdern (2) zugewandte Seite des Trapezes kann auch konkav verlaufen - eingeschoben ist, wobei die Breite (B) der kleinsten Seite des Trapezes der Wandstärke (W) des äußeren Ringes (4) bzw. der Ringsegmente (4S) entspricht und wobei diese kleinste Seite des Trapezes an der Stirnfläche des äußeren Ringes (4) bzw. der Ringsegmente (4S) anliegt.

20. Rollfeder nach Anspruch 19, dadurch gekennzeichnet, daß auf die den Federdorn (2) bildende Welle mindestens eine Hülse (14) mit etwa trapezförmigem Querschnitt - die dem Federgehäuse (1) zugewandte Seite des Trapezes kann auch konkav verlaufen -aufgeschoben ist wobei die Breite (b) der kleinsten Seite des Trapezes der Wandstärke (w) des inneren Ringes (5) bzw. der Ringsegmente (5S) entspricht und wobei diese kleinste Seite des Trapezes an der Stirnfläche des inneren Ringes (5) bzw. der Ringsegmente (5S) anliegt.

21. Rollfeder nach Anspruch 19 oder 20, dadurch gekennzeichnet, daß die in den das Federgehäuse (1) bildenden Hohlzylinder eingeschobene Hülse (13) und/oder die auf die den Federdorn (2) bildende Welle aufgeschobene Hülse (14) in axialer Richtung geteilt ausgebildet ist.

22. Rollfeder nach einem der Ansprüche 1 bis 18, dadurch gekennzeichnet, daß das Federgehäuse (1.1) glockenförmig und der Federdorn (2.1) kegelförmig ausgebildet sind, wobei die Abrollflächen jeweils konkav verlaufen, und daß das Federgehäuse (1.1) und der Federdorn (2.1) mit Ausnehmungen (15, 16) versehen sind, in die das aus dem äußeren Ring (4) und dem inneren Ring (5) bzw. den Ringsegmenten (4S, 5S) und dem Gummiring (3) gebildete Federelement eingesetzt ist.

23. Rollfeder nach einem der Ansprüche 1 bis 22, dadurch gekennzeichnet, daß mindestens zwei Federelemente koaxial hintereinander angeordnet sind.

24. Rollfeder nach einem der Ansprüche 1 bis 23, dadurch gekennzeichnet, daß mindestens zwei Federelemente nebeneinander angeordnet sind.

25. Rollfeder nach einem der Ansprüche 1 bis 24, dadurch gekennzeichnet, daß das Federgehäuse (1) in axialer Richtung geteilt ausgebildet ist.

Fig. 1

Fig. 2

Fig. 3

Fig. 4

Fig. 5

Fig. 6

Fig. 7

Fig. 8

Fig. 9

Fig. 10

Fig. 11

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 323 925 (GLOUGH GUMMIWERKE AG) * Seite 3, Zeilen 5-15; Ansprüche 1-3; Figur 4 * | 1,3,10, 18,23 | F 16 F 1/38 B 61 F 5/00 |
| A | | 19,20, 21 | |
| Y | DE-A-2 404 768 (GLOUGH GUMMIWERKE AG) * Figuren 1-6 * | 1,3,10, 14 | |
| A | | 22 | |
| Y | BE-A- 479 697 (SAGA) * Ganze Dokument * | 1,3,10, 14 | |
| A | | 2,4,6 | |
| A | GB-A- 629 354 (L.F. THIRY) * Figuren 1-9 * | 1,10,11 ,13,18, 23,24 | |
| A | FR-A-2 511 961 (THE BUDD CO.) * Seite 7, Zeilen 7-19; Figur 10 * | 1,3,8 | |
| A | AU-B- 481 457 (GENERAL STEEL INDUSTRIE) * Seiten 5,6 * | 1-4 | |
| A | FR-E- 58 557 (PIRELLI) * Seite 2; Figur 1 * | 1,18-21 ,23 | |
| A | US-A-2 231 195 (TRANSIT RESEARCH) * Figur 3 * | 1,16 | |
| A | US-A-1 992 631 (TECALEMIT LTD) * Figur 1 * | 1,17,24 | |
|   |                                           -/- | | |

**RECHERCHIERTE SACHGEBIETE (Int. Cl.5)**

B 61 F
F 16 F
B 62 D
B 60 G

Der vorliegende Recherchenbericht wurde für alle Patentansprüche erstellt

| Recherchenort | Abschlußdatum der Recherche | Prüfer |
|---|---|---|
| DEN HAAG | 04-07-1990 | TSITSILONIS L. |

**Europäisches Patentamt**

# EUROPÄISCHER RECHERCHENBERICHT

Nummer der Anmeldung

EP 90 20 0466

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 265 392  (W.H. MINER INC.)<br>* Figuren 1-4 *<br>--- | 1-4 | |
| P,A | DE-U-8 901 526  (WORWERK & SOHN)<br>* Figuren 2,4,5 *<br>----- | 1,2,3,8 | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| DEN HAAG | 04-07-1990 | TSITSILONIS L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument